# EUROPEAN PATENT SPECIFICATION

(11) **EP 3 878 267 B1**
(45) Date of publication and mention of the grant of the patent: **03.01.2024**
(21) Application number: 21153627.1
(22) Date of filing: 27.01.2021
(51) Int. Cl.: A01D 75/30, A01D 57/20, A01D 75/28, A01D 34/66

(54) **MOWER COMBINATION**
MÄHVORRICHTUNG
COMBINAISON DE MÉCANISME DE TONTE

(30) Priority: 11.03.2020 GB 202003489
(43) Date of publication of application: 15.09.2021
(73) Proprietor: AGCO International GmbH, 8212 Neuhausen am Rheinfall (CH)
(72) Inventor: KINAST, Ronnie, 90537 Feucht (DE); FILLEP, Johannes, 90537 Feucht (DE)
(74) Representative: AGCO Intellectual Property Department

(56) References cited:
- EP-A1- 2 529 614
- EP-A1- 2 769 613

## Description

### FIELD OF THE INVENTION

The present invention relates to a mower combination comprising an agricultural vehicle and a number of mowing units suitable for generating swathes of cut crop, and in particular to a mowing apparatus for cutting a standing crop such as hay operating on a slope.

### BACKGROUND

It is known to provide a mower combination in which a first mower unit is located ahead of an agricultural vehicle such as a tractor with two further lateral mower units trailing the agricultural vehicle. The rear mower units are provided with conveyor units for depositing cut crop into a swath or swathes behind the agricultural vehicle.

Typically the conveyor units are operated at constant speeds. This has as a disadvantage that as the speed of the agricultural vehicle is increased, the harvesting throughput increases leading to a build-up of cut crop on the conveyor units with an increasing risk that the build-up may become a blockage. When this happens mowing must stop while an operator attends to clearing of the blockage. In a time sensitive operation such a mowing, such stoppages are highly undesirable.

Further it is desirable when creating a swath of cut crop for the swath to be of uniform width. This aids in processing of the swath by a subsequent vehicle, such as a baler or a loader wagon. An uneven swath can cause inefficient processing of the cut crop by the subsequent vehicle. Since the cut crop is a commercial product it is highly desirable that the cut crop should be processed as efficiently as possible.

These problems can become worse when the mower combination is being operated on a sloping surface. One solution to the problems is provided in EP 2 769 613 in which the speed of operation of the endless belts of the conveyor units may be altered depending upon the slope encountered.

It is an advantage of the present invention that these problems are addressed.

Other advantages of the present invention will become apparent as discussed below.

### SUMMARY OF THE INVENTION

According to a first aspect of the present invention, a mower combination comprises an agricultural vehicle and a number of mowing units suitable for cutting a standing crop connected to the agricultural vehicle, including a front mowing unit and two lateral mowing units located behind and to the sides of the front mowing unit, each of the lateral mowing units being provided with conveyor units to deposit the cut crop as a swath, each of the conveyor units being lateraly displaceable with respect to an assoictaed latereal mowing unit, the mower combination further comprising a sensor configured to provide input signals representative of an angle of inclination of the mower combination, sensors configured to provide input signals representative of a lateral displacement of each conveyor unit with respect to an associated lateral mowing unit and a control unit configured to receive a control unit configured to receive a plurality of input signals, including the input signals representing the angle of inclination of the mower combination, and the input signals representative of the lateral displacement of each of the conveyor units with respect to the associated lateral mowing units, to compare the signals for the angle of inclination of the mower combination and the lateral displacement of the conveyor units with respect to the associated lateral mowing units against a predetermined set of values and to adjust the lateral displacement of at least one conveyor unit with respect to the associated lateral mowing unit based on this comparison.

This has as an advantage that the lateral displacement of the conveyor units can be altered to allow for production of a uniform swath depending upon the angle of inclination detected.

Preferably the conveyor units comprise conveyor belts or conveyor screws.

Preferably, the mower combination further comprises a user terminal coupled to the control unit, the user terminal providing feedback to an operator of the adjustment of the lateral displacement of the at least one conveyor unit.

According to a second aspect of the invention, a method of operation of a mower combination comprises the steps of: receiving in real time input signals representing an angle of inclination of the mower combination, and a lateral displacement of at least one conveyor unit with respect to the associated lateral mowing unit forming part of the mower combination; and automatically adjusting the lateral displacement of the at least one conveyor unit based on a comparison of the input signals with respective target values.

According to a third aspect of the invention, a computer readable program comprises instructions that when executed by a computer causes a mower combination according to the first aspect of the invention to implement the method of the second aspect of the invention.

### BRIEF DESCRIPTION OF THE DRAWINGS

The invention will now be described, by way of example only, with reference to the accompanying drawings, in which:
Figure 1 shows a plan view of a mower combination for use in the present invention;
Figure 2 shows a rear view of the mower combination shown in Figure 1;

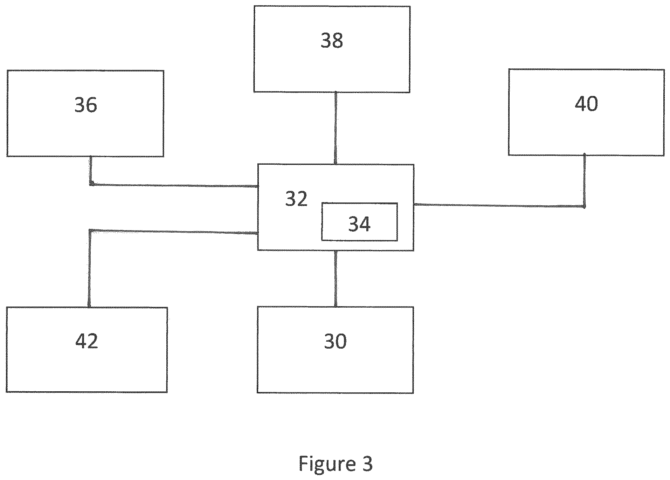

Figure 3 shows a schematic view of elements of a mower combination for use in the present invention;
Figure 4 shows a flow diagram illustrating an example control method in accordance with the present invention; and
Figure 5 shows a flow diagram illustrating a further example control method in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is limited by the appended claims.

But to the contrary, the disclosure includes numerous alternatives, modifications and equivalents as will become apparent from consideration of the following detailed description.

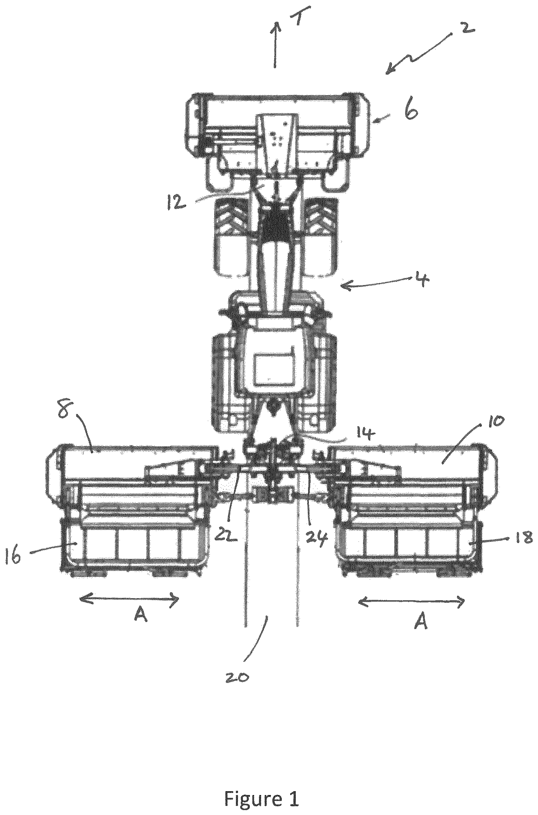

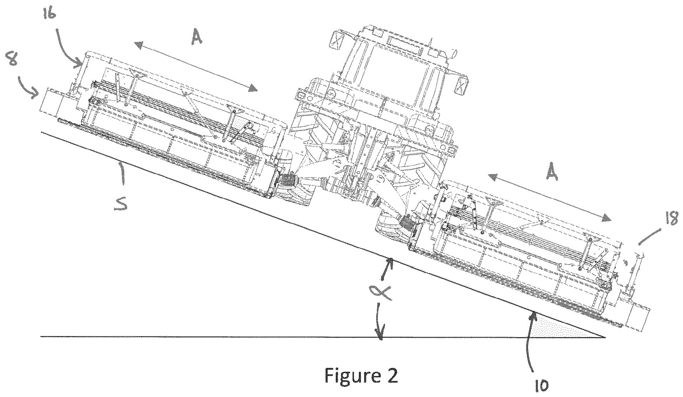

Reference to terms such as longitudinal, lateral and vertical are made with respect to a longitudinal vehicle axis which is parallel to a normal forward direction of travel. With reference to Figures 1 and 2, views of a mower combination 2 for use in the present invention are shown.

A mower combination 2 comprises an agricultural vehicle 4 such as a tractor and a number of mowing units 6,8,10 suitable for cutting standing crop, the mowing units 6,8,10 being connected to the agricultural vehicle. The mowing units include a front mowing unit 6 located to the front of the agricultural vehicle 4 and two lateral mowing units 8,10 located behind and to the sides of the front mowing unit 6, each of the mowing units 6,8,10 adapted to cut crop. The front mowing unit 6 is conveniently mounted on a front hitch 12 of the agricultural vehicle 4. The two lateral mowing units 8,10 are conveniently mounted on a central chassis supported from a rear hitch 14 of the agricultural vehicle 4.

The lateral mowing units 8,10 are supported from a central chassis by hydraulic units 22,24. Each hydraulic unit 22,24 may be used to move a respective lateral mowing unit 8,10 from a working position to a transport position. A headland position may be defined between the working position and the transport position. In the working position the height of each of the lateral mowing units 8,10 above the ground surface may be further controlled by operation of the hydraulic units 22,24.

In the illustrated embodiment of Figure 1 a swath 20 produced by the front mowing unit 6 is shown. In practice conveyor units 16,18 mounted to the rear of the lateral mowing units 8,10 are adopted to direct the deposit of cut crop material to one side or the other of the respective lateral mowing units 8,10 to produce a broader central swath or one or more additional swathes as desired. These swathes are omitted from Figure 1 for clarity.

The conveyor units 16, 18 may be driven in any suitable manner, for example by way of a hydraulic circuit served by an accumulator on the tractor or by their own pump and reservoir mounted on the mowing unit.

The conveyor units 16,18 are mounted to be displaceable with respect to the lateral mowing units 8,10. The conveyor units 16,18 are mounted to be displaced (arrows A in Figures 1 and 2) in a direction lateral to a direction of travel (arrow T in Figure 1) of the mower combination 2.

A suitable arrangement to enable displacement of the conveyor units is shown in EP 2 529 614.

The conveyor units 8,10 can comprise conveyor belts or conveyor screws.

The angle of slope of a ground surface S over which the mower combination 2 is travelling and the angle of inclination of the mower combination itself when travelling over the ground surface S can be considered to correspond and will be referred to as the slope angle α.

An operator can control operation of the front and rear mowing units 6,8,10 from within the agricultural vehicle 4 by use of a suitable user terminal 30. For example the operator can control operation of the direction of the conveyor units 16,18, can cause each of the mowing units 6,8,10 to move from a working position to a headland position, can cause the rear mowing units 8,10 to move from the working position to a transport position, or can cause the conveyor units 16,18 to move from an active position to an inactive position.

The user terminal 30 communicates with an electronic control unit 32. The control unit 32 provides signals to control operation of the front and rear hitches 12,14 of the agricultural vehicle 4 and provides signals to control operation of the mowing units 6,8,10 and the conveyor units 16,18. Conveniently the signals are provided by way of a suitable data communication network such as one compliant with the ISOBUS standard (a network in conformance to ISO 11783).

The control unit 32 may conveniently comprise a single processor located on the agricultural vehicle or its functions may be split between a processor located on the agricultural vehicle and one or more additional processors located on the mowing units 6,8,10, the additional processor(s) being in electronic communication with the first processor.

The control unit 32 is also able to access a suitable memory 34. The memory 34 may take any suitable form and is in electronic communication with the control unit 32. The memory 34 is adapted to store, in any suitable manner such as a database or look up table, reference values for a desired lateral displacement of the conveyor units 16,18 and a slope angle α.

The mower combination 2 further comprises a plurality of sensors adapted to provide input signals to the control unit 32. An input signal representing the slope angle α can be provided by a suitable sensor 36. Examples of such sensors include a sensor incorporated within an electronic control system of the agricultural vehicle 4 or an inclinometer provided on the mower combination 2. Alternatively the input signal could be provided as a result of information provided by a GPS sensor 40, for example the slope angle α between two points at the location of the mower combination 2 may be known or calculated from existing mapped data.

In the case of a GPS sensor 40, it will be understood that a network interface 42 connected to the control unit 32 is provided. The network interface 42 can comprise hardware and/or software that enables wireless connection to one or more remotely located computing devices over a network (e.g., a wireless or mixed wireless and wired network). For instance, the network interface 42 may cooperate with browser software or other software of the control unit 32 to communicate with a server device, enabling remote monitoring or control of the mower combination 2.

Suitable sensors 38 mounted on the mower combination 2, for example on the conveyor units 16,18, provide input signals representative of the lateral displacement of the conveyor units 16,18. The lateral displacement may be measured from any suitable reference point.

The control unit 32 is configured to receive the input signals representing the slope angle α and the lateral displacement of the conveyor units 16,18 and to compare the input signals with the reference values for a reference lateral displacement of the conveyor units 16,18 at a given slope angle α and, as required, adjust the lateral displacement of at least one conveyor unit 16,18 based on this comparison.

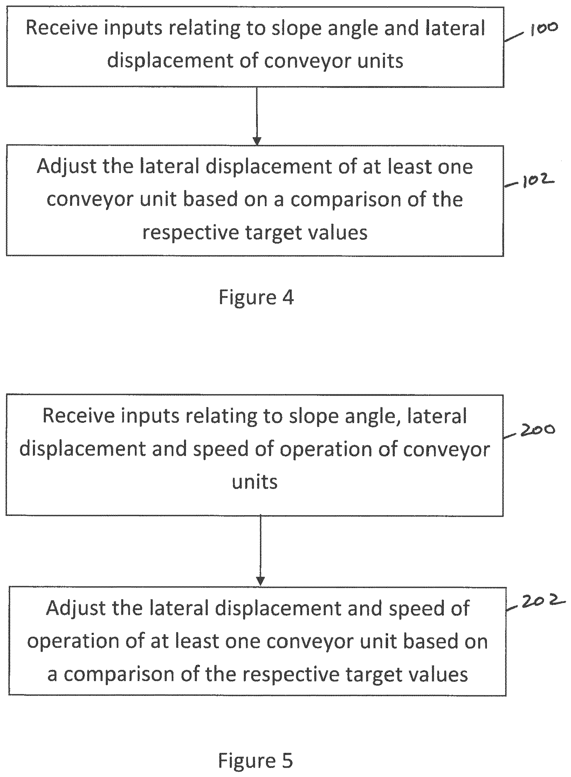

For example as the mower combination 2 traverses a slope, the control unit 32 detects the slope angle α and the lateral displacement of the conveyor units 16,18 (step 100, Figure 4) and based on a comparison of the input signals with the reference values stored in the memory 34, the control unit 32 causes the lateral displacement of at least one conveyor unit 16,18 to be adjusted (step 102). For example, depending upon a direction of travel over the slope angle α, the left hand conveyor 16 may be moved to the left (away from the agricultural vehicle 2) and the right hand conveyor unit 18 simultaneously moved to the left (toward the agricultural vehicle 2). Alternatively for the reverse slope, the left hand conveyor unit 16 may be moved to the right and the right hand conveyor unit 18 also moved to the right.

In this way despite the change in slope angle α, a constant swath width is produced. This is desirable for the further processing of the cut crop by a subsequent vehicle.

Additionally, the control unit 32 may be configured also to receive input signals representing the slope angle α, the lateral displacement of the conveyor units 16,18 and the speed of operation of the conveyor units 16,18. In this case the memory 34 is adapted to store, in any suitable manner such as a database or look up table, values for target values of combinations of the lateral displacement of the conveyor units 16,18 and the speed of operation of the conveyor units 16,18 at a given slope angle α.

The control unit 32 receives the input signals representing the slope angle α, the lateral displacement of the conveyor units 16,18 and the speed of operation of the conveyor units 16,18 (step 200, Figure 5), and based on a comparison of the input signals with the reference or target values stored in the memory 34, the control unit 32 causes lateral displacement of the at least one conveyor unit 16,18 and also causes a change in speed of operation of the at least one of the conveyor units 16,18 (step 202).

In other embodiments, the control unit 32 may receive input from the user terminal 30, as entered by the operator. For instance, the operator may prompt a display of the parameters (the slope angle α, the speed of the mower combination 2, the speed of operation of the conveyor units 16,18, the lateral displacement of the conveyor units 16,18), where the control unit 32 provides the corresponding information for rendering on a display screen in the agricultural vehicle 4 or remotely, or otherwise provided to an operator in other forms (e.g., audibly). In some embodiments, the control unit 32 may provide feedback of any automatic adjustment in the lateral position of the conveyor units 16,18 and, if appropriate, any automatic adjustment to the speed of the conveyor units 16,18 to the operator via the user terminal 30.

From reading the present disclosure, other modifications will be apparent to persons skilled in the art. However, the scope of the present invention is limited by the appended claims.

## Claims

1. A mower combination (2) comprising an agricultural vehicle (4) and a number of mowing units (6,8,10) suitable for cutting a standing crop connected to the agricultural vehicle (4), including a front mowing unit (6) and two lateral mowing units (8,10) located behind and to the sides of the front mowing unit (6), each of the lateral mowing units (8,10) being provided with conveyor units (16,18) to deposit the cut crop as a swath, each of the conveyor units (16,18) being laterally displaceable with respect to an associated lateral mowing unit (8,10), the mower combination further comprising a sensor (36) configured to provide input signals representative of an angle of inclination (α) of the mower combination (2), sensors (38) configured to provide input signals representative of a lateral displacement of each conveyor unit (16,18) with respect to an associated lateral mowing unit (8,10) and a control unit (32) configured to receive a plurality of input signals including the input signals representing the angle of inclination (α) of the mower combination (2), and the input signals representative of the lateral displacement of each of the conveyor units (16,18) with respect to the associated lateral mowing units (8,10), to compare the signals for the angle of inclination (α) of the mower combination (2) and the lateral displacement of the conveyor units (16,18) with respect to the associated lateral mowing units (8,10) against a predetermined set of values and to adjust the lateral displacement of at least one conveyor unit (16,18) with respect to the associated lateral mowing unit (8,10) based on this comparison.

2. A mower combination according to claim 1, **characterised in that** the conveyor units (16,18) comprise conveyor belts or conveyor screws.

3. A mower combination according to claim 1 or claim 2, **characterised in that** the mower combination (2) further comprises a user terminal (30) coupled to the control unit (32), the user terminal (30) providing feedback to an operator of the adjustment of the lateral displacement of the at least one conveyor unit (16,18).

4. A method of operation of a mower combination comprising the steps of:
receiving in real time input signals representing an angle of inclination (α) of the mower combination, and a lateral displacement of at least one conveyor unit (16,18) with respect to the associated lateral mowing unit (8,10) forming part of the mower combination (2); and automatically adjusting the lateral displacement of the at least one conveyor unit (16,18) based on a comparison of the input signals with respective target values.

5. A computer readable program comprising instructions that, when executed by a computer, causes a mower combination (2) according to any of claim 1 to claim 3 to implement the method of claim 4.

## Patentansprüche

1. Mähkombination (2) mit einem landwirtschaftlichen Fahrzeug (4) und einer Anzahl von zum Schneiden von Pflanzen auf dem Halm geeigneten, mit dem landwirtschaftlichen Fahrzeug (4) verbunden Mäheinheiten (6, 8, 10), einschließlich einer Frontmäheinheit (6) und zwei seitlichen Mäheinheiten (8, 10), die hinter und auf den Seiten der Frontmäheinheit (6) angeordnet sind, wobei jede seitliche Mäheinheit (8, 10) mit einer Fördereinheit (16, 18) versehen ist, um die geschnittenen Pflanzen als Schwaden abzulegen, wobei jede der Fördereinheiten (16, 18) bezüglich der zugehörigen seitlichen Mäheinheit (8, 10) seitwärts verlagerbar ist, wobei die Mähkombination weiterhin einen Sensor (36), der konfiguriert ist, um Eingangssignale bereitzustellen, welche für einen Neigungswinkel (α) der Mähkombination (2) repräsentativ sind, Sensoren (38), die konfiguriert sind, um Eingangssignale bereitzustellen, welche für eine seitliche Verlagerung jeder Fördereinheit (16, 18) bezüglich einer zugehörigen seitlichen Mäheinheit (8, 10) repräsentativ sind, und eine Steuereinheit (32) aufweist, die konfiguriert ist, um eine Mehrzahl von Eingangssignalen einschließlich der Eingangssignale, welche den Neigungswinkel (α) der Mähkombination (2) repräsentieren, und der Eingangssignale, welche die seitliche Verlagerung jeder Fördereinheit (16, 18) bezüglich der zugehörigen seitlichen Mäheinheit (8, 10) repräsentieren, zu empfangen, um die Signale für den Neigungswinkel (α) der Mähkombination (2) und die seitliche Verlagerung der Fördereinheiten (16, 18) bezüglich der zugehörigen seitlichen Mäheinheiten (8, 10) mit einem vorgegebenen Satz von Werten zu vergleichen und um die seitliche Verlagerung mindestens einer Fördereinheit (16, 18) bezüglich der zugehörigen seitlichen Mäheinheit (8, 10) basierend auf diesen Vergleich einzustellen.

2. Mähkombination nach Anspruch 1, **dadurch gekennzeichnet, dass** die Fördereinheiten (16, 18) Förderbänder oder Förderschrauben aufweisen.

3. Mähkombination nach Anspruch 1 oder Anspruch 2, **dadurch gekennzeichnet, dass** die Mähkombination (2) weiterhin ein an die Steuereinheit (32) gekoppeltes Benutzerendgerät (30) aufweist, wobei das Benutzerendgerät (30) Feedback bezüglich der Einstellung der seitlichen Verlagerung der mindestens einen Fördereinheit (16, 18) an einen Bediener bereitstellt.

4. Verfahren zum Betreiben einer Mähkombination mit den Schritten: Empfangen in Echtzeit von Eingangssignalen, welche einen Neigungswinkel (α) der Mähkombination und eine seitliche Verlagerung von mindestens einer Fördereinheit (16, 18) bezüglich der zugehörigen seitlichen Mäheinheit (8, 10), welche einen Teil der Mähkombination (2) ausbildet, repräsentieren; und automatisches Einstellen der seitlichen Verlagerung der mindestens einen Fördereinrichtung (16, 18) basierend auf einem Vergleich der Eingangssignale mit entsprechenden Zielwerten.

5. Computerlesbares Programm, das Instruktionen aufweist, welche dann, wenn sie von einem Computer ausgeführt werden, eine Mähkombination (2) nach einem der Ansprüche 1 bis 3 dazu veranlassen, das Verfahren von Anspruch 4 zu implementieren.

## Revendications

1. Combinaison de faucheuse (2) comprenant un véhicule agricole (4) et un certain nombre d'unités de fauchage (6, 8, 10) adaptées afin de couper une culture sur pied, couplées au véhicule agricole (4), comportant une unité de fauchage avant (6) et deux unités de fauchage latérales (8, 10) situées derrière et sur les côtés de l'unité de fauchage avant (6), chacune des unités de fauchage latérales (8, 10) étant équipée d'unités de convoyage (16, 18) destinées à déposer la culture coupée sous la forme d'andain, chacune des unités de convoyage (16, 18) pouvant être déplacée latéralement par rapport à une unité de fauchage latérale associée (8, 10), la combinaison de faucheuse comprenant, en outre, un capteur (36) configuré de manière à fournir des signaux d'entrée représentatifs d'un angle d'inclinaison (α) de la combinaison de faucheuse (2), des capteurs (38) configurés de manière à fournir des signaux d'entrée représentatifs d'un déplacement latéral de chaque unité de convoyage (16, 18) par rapport à une unité de fauchage latérale associée (8, 10) et une unité de commande (32) configurée de manière à recevoir une pluralité de signaux d'entrée comportant les signaux d'entrée représentant l'angle d'inclinaison (α) de la combinaison de faucheuse (2), et des signaux d'entrée représentatifs du déplacement latéral de chacune des unités de convoyage (16, 18) par rapport aux unités de fauchage latérales associées (8, 10), afin de comparer les signaux d'angle d'inclinaison (α) de la combinaison de faucheuse (2) et du déplacement latéral des unités de convoyage (16, 18) par rapport aux unités de fauchage latérales associées (8, 10) à un jeu de valeurs prédéterminées et de régler le déplacement latéral de la au moins une unité de convoyage (16, 18) par rapport à l'unité de fauchage latérale associée (8, 10) sur la base de cette comparaison.

2. Combinaison de faucheuse selon la revendication 1, **caractérisée en ce que** les unités de convoyage (16, 18) comprennent des convoyeurs à bande ou des convoyeurs à vis.

3. Combinaison de faucheuse selon la revendication 1 ou 2, **caractérisée en ce que** la combinaison de faucheuse (2) comprend, en outre, un terminal d'utilisateur (30) couplé à l'unité de commande (32), le terminal d'utilisateur (30) assurant le retour d'information concernant le réglage du déplacement latéral de la au moins une unité de convoyage (16, 18) à un opérateur .

4. Procédé de commande d'une combinaison de faucheuse comprenant les étapes de : réception en temps réel de signaux d'entrée représentant un angle d'inclinaison (α) de la combinaison de faucheuse et un déplacement latéral d'au moins une unité de convoyage (16, 18) par rapport à l'unité de fauchage latérale associée (8, 10) faisant partie de la combinaison de faucheuse (2) ; et de réglage automatique du déplacement latéral de la au moins une unité de convoyage (16, 18) sur la base d'une comparaison des signaux d'entrée avec des valeurs de consigne respectives.

5. Programme pouvant être lu par un ordinateur comprenant des instructions qui, lorsqu'elles sont exécutées par un ordinateur, amène une combinaison de faucheuse (2) selon l'une quelconque des revendications 1 à 3 à mettre en oeuvre le procédé selon la revendication 4.
